# EUROPÄISCHE PATENTSCHRIFT

(11) **EP 2 566 748 B1**
(45) Veröffentlichungstag und Bekanntmachung des Hinweises auf die Patenterteilung: **14.06.2017**
(21) Anmeldenummer: 11715532.5
(22) Anmeldetag: 19.04.2011
(51) Int. Cl.: B62M 6/45

(54) **VERFAHREN ZUM ABSCHÄTZEN EINES DREHMOMENTS UND VORRICHTUNG ZUR ABSCHÄTZUNG EINES DREHMOMENTS FÜR TRETKURBELANTRIEBE**
METHOD FOR ESTIMATING A TORQUE AND DEVICE FOR ESTIMATING A TORQUE FOR A PEDAL CRANK DRIVE
PROCÉDÉ D'ÉVALUATION D'UN COUPLE DE ROTATION ET DISPOSITIF D'ÉVALUATION D'UN COUPLE DE ROTATION POUR DES SYSTÈMES D'ENTRAÎNEMENT PAR PÉDALIER

(30) Priorität: 06.05.2010 DE 102010028656
(43) Veröffentlichungstag der Anmeldung: 13.03.2013
(73) Patentinhaber: Robert Bosch GmbH, 70442 Stuttgart (DE)
(72) Erfinder: KOERWER, Matthias, 77830 Buehlertal (DE)
(86) Internationale Anmeldenummer: PCT/EP2011/056247
(87) Internationale Veröffentlichungsnummer: WO 2011/138166

(56) Entgegenhaltungen:
- DE-A1- 19 630 553
- US-A1- 2006 095 191
- US-B1- 6 545 437

## Beschreibung

### Stand der Technik

Die Erfindung betrifft das Gebiet der Leistungserfassung von Tretkurbelantrieben, insbesondere von Tretkurbelantrieben, die Teil eines Elektrofahrrads sind. Der Tretkurbelantrieb wird neben der Fortbewegung auch zur Erfassung der Pedalleistung verwendet, um die Leistung des Elektroantriebs gemäß der Pedalleistung einzustellen. Auf diesem Gebiet sind Vorrichtungen bekannt, die das auf die Tretkurbel ausgeübte Drehmoment mittels eines Torsionssensors mechanisch erfassen, der unmittelbar auf der Tretkurbel angeordnet ist. Derartige Sensoren sind aufwendig und gleichzeitig fehleranfällig, da sie an der Tretkurbel oder an der Kurbelwelle angeordnet werden müssen und somit gegenüber äußeren Einflüssen stark exponiert sind.

Weitere Ansätze zur Leistungserfassung sind von Fahrradtrainingsgeräten bekannt, wobei die zur Simulation der Fahrumgebung verwendeten Reibkräfte erfasst werden. Hierbei wird jedoch notwendigerweise der Tretkurbelantrieb stark abgebremst, so dass diese Ansätze nicht für Fahrräder geeignet sind.

Die US 6 545 437 B1 betrifft eine Steuerung für einen Motorantrieb einer durch Muskelantriebskraft sowie den Motorantrieb bewegbaren, insbesondere fahrbaren, Vorrichtung, wie z. B. eines Fahrrades oder eines Golfkarrens mit einem Motorhilfsantrieb. Die Steuerung weist eine Einrichtung für die Bildung von Motorantriebssteuersignalen auf der Basis einer kinematischen Auswertung der Bewegung der Vorrichtung auf.

Die DE 196 30 553 A1 betrifft eine beschleunigungsabhängige Ansteuerung für einen Elektromotor, bei der ein Sollwert für eine Leistungsgröße eines sich selbst bewegenden elektrischen Antriebssystems durch die Auswertung eines Beschleunigungssensors erzeugt. Hierbei wird das Ausgangssignal des Beschleunigungssensors vorzugsweise mit in der Elektronik abgespeicherten Kennlinien verglichen und der Sollwert für die Leistungsgröße aus diesem Vergleich unter Berücksichtigung weiterer Einflussfaktoren ermittelt.

Die US 2006/0095191 A1 betrifft ein nicht-mechanisches Modul zum Abschätzen eines Pedaldrehmoments und einer von einem Fahrradfahrer verbrauchten Energie.

Die WO2010/094515 A1 betrifft ein Verfahren zum Betreiben eines motorisch unterstützten Tretvehikels, insbesondere Fahrrads, bei dem die vom Fahrer aktuell gewünschte Antriebsunterstützung über eine dynamische Auswertung der Tretkurbeldrehzahl ermittelt wird, ohne dass eine tatsächliche Messung der Tretkraft oder des Drehmomentes bezüglich der Tretkurbelachse erforderlich ist. Aus der Winkelgeschwindigkeit und/oder der Winkelbeschleunigung der Tretkurbel wird in einer Steuer- und/oder Regeleinrichtung unter Zuhilfenahme sonstiger der Steuer- und/oder Regeleinrichtung bekannter Betriebsparameter auf die gewünschte Drehmomentanforderung geschlossen.

In der Druckschrift DE 196 01 194 A1 ist ein Regelungsverfahren dargestellt, bei dem die Fortbewegungsgeschwindigkeit eines Elektrofahrrads erfasst wird. Aus dem Verlauf der Geschwindigkeit wird auf die Leistung geschlossen, die der Fahrer beisteuert, um die Leistung des Elektromotors in der Höhe der Fahrerleistung vorzusehen. Der Geschwindigkeitsverlauf des Fahrrads ist jedoch in nur wenigen Situationen ein markantes Merkmal, aus dem sich auf die tatsächliche Leistung des Pedalantriebs schließen lässt.

Es ist daher eine Aufgabe der Erfindung, eine Vorgehensweise aufzuzeigen, mit dem sich das Drehmoment in präziser Weise ermitteln lässt, ohne auf exponiert anzubringende, teure Torsionssensoren zurückgreifen zu müssen.

### Offenbarung der Erfindung

Diese Aufgabe wird gelöst durch die Gegenstände der unabhängigen Ansprüche.

Das der Erfindung zugrunde liegende Konzept ist es, aus der Betrachtung der Schwankungen in der Drehzahl, die sich auf einfache Weise präzise erfassen lässt, auf das Drehmoment zu schließen, das auf die Tretkurbel ausgeübt wird. Der Erfindung liegt die Erkenntnis zugrunde, dass bei geringer Belastung ein Fahrer regelmäßiger tritt, als bei starken Belastungen. Es ergibt sich somit aufgrund der menschlichen Anatomie der Muskulatur, der Beine und der Hüfte sowie aufgrund der Wechselwirkung zwischen Anatomie und Pedalantrieb eine verlässliche Abhängigkeit zwischen Schwankungen in der Drehzahl (als Gegenteil der Regelmäßigkeit) und dem Drehmoment, mit dem die Pedale betätigt werden. Die Abhängigkeit zwischen Stärke der Schwankung, d.h. der Unregelmäßigkeit, und dem Drehmoment (ein Maximaldrehmoment oder ein gemitteltes Drehmoment) ist daher eine streng monoton steigende Funktion. Die gleiche Abhängigkeit besteht zwischen Schwankung der Drehzahl und Pedalantriebleistung, die der Fahrer leistet. Die Abhängigkeit lässt sich ohne Weiteres zwischen verschiedenen Fahrern übertragen ohne wesentlichen Verlust an Präzision.

Als Maß für die Schwankung bzw. Unregelmäßigkeit der Drehzahl wird erfindungsgemäß der Wechselanteil des zeitlichen Verlaufs der Winkelgeschwindigkeit betrachtet. Die Winkelgeschwindigkeit ist die zeitliche Ableitung des Winkelverlaufs der Tretkurbel und entspricht (bis auf einem Proportionalitätsfaktor) der Drehzahl. Die Winkelgeschwindigkeit bzw. Drehzahl wird kontinuierlich bzw. periodisch erfasst mit einer zeitlichen Auflösung, die deutlich über der Drehzahl liegt, d.h. kontinuierlich bzw. mit einer Abtastfrequenz f > 5 Hz, 20 Hz, oder 50 Hz. Die Abtastfrequenz liegt grundsätzlich über der doppelten Drehzahl, alleine um dem Nyquistkriterium zu genügen, wobei als Drehzahl eine typische maximal übliche Drehzahl für den Pedalantrieb angenommen wird, bspw. 2 1/s (d.h. 2 Hz). Vorzugsweise ist die Abtastfrequenz ein Vielfaches der typischen maximal üblichen Drehzahl, mit N ≥ 2, 5, 10, 20 oder 50. Entsprechend wird die Winkelgeschwindigkeit mit einem Winkelgeber (bsp. magnetisch, induktiv oder optisch) oder mit einem Winkelgeschwindigkeitsgeber (bsp. basierend auf dem Dynamoprinzip) erfasst, wobei die Winkelerfassung bzw. Winkelgeschwindigkeitserfassung mit einer Winkelauflösung von < 30°, 10°, 5°, 2° oder < 1° ausgeführt wird. Der entsprechende Winkelsensor (ein Winkelgeschwindigkeitsgeber oder ein Winkelgeber) weist diese Winkelauflösung auf.

Die Schwankung der Winkelgeschwindigkeit betrifft daher die Schwankung der Momentandrehzahl bzw. der Momentanwinkelgeschwindigkeit, wobei die zeitliche bzw. winkelbezogene Auflösung als ausreichend zeitdiskret betrachtet wird, um diese Größen als Momentangrößen zu bezeichnen. Als Signaleigenschaft, die die Schwankung der Winkelgeschwindigkeit wiedergibt, welche wiederum als Maß für das (gemittelte oder maximale) Drehmoment betrachtet wird, dient erfindungsgemäß die Verzerrung der Verlaufsform der Winkelgeschwindigkeit gegenüber einem sinusförmigen Verlauf, oder beides. Als Signaleigenschaft der Winkelgeschwindigkeit wird eine Größe herangezogen, die die Abweichung der Signalform der Winkelgeschwindigkeit (d.h. deren Wechselanteil) von einer Sinusform angibt. Hierbei ist die Signaleigenschaft ein Maximalgradient (d.h. dessen Betrag) oder eine maximale Änderungsrate (bzw. deren Betrag) oder ein Verhältnis zwischen niederfrequenten zu höherfrequenten Anteilen der Winkelgeschwindigkeit (bzw. des Wechselanteils der Winkelgeschwindigkeit) oder eine Differenz (bzw. deren Leistung) zwischen dem Verlauf der Winkelgeschwindigkeit und einem Sinussignal, das die gleiche Frequenz wie die Winkelgeschwindigkeit (bzw. deren Wechselanteil) aufweist. Das Sinussignal bzw. dessen Frequenz lässt sich Ermitteln durch Erzeugen eines Sinussignals mit den gleichen Wendepunkten wie der Verlauf der Winkelgeschwindigkeit oder mit den gleichen relativen Extrema. Insbesondere ist der Verlauf des Spektrums der Winkelgeschwindigkeit charakteristisch für das Drehmoment, mit dem der Kurbelantrieb betätigt wird, wobei das Spektrum der Winkelgeschwindigkeit einem Spektrum eines Sinus ähnelt, wenn das Drehmoment gering ist, und das Spektrum vor allem an höherfrequenten Anteilen zunimmt (im Verhältnis zu einem Spektrum bei geringem Drehmoment), wenn das Drehmoment steigt. Die drehmomentabhängige Verzerrung lässt sich somit gut am Frequenzspektrum des zeitlichen Verlaufs der Winkelgeschwindigkeit erkennen.

Die Erfindung wird daher vorgesehen von einem Verfahren zum Abschätzen eines Drehmoments, das auf eine Tretkurbel eines Elektrofahrrads ausgeübt wird. Das erfindungsgemäße Verfahren sieht vor, dass in Abhängigkeit von der Zeit die Winkelgeschwindigkeit erfasst wird, mit der die Tretkurbel angetrieben wird. Hierzu kann ein Winkelsensor verwendet werden, der unmittelbar die Winkelgeschwindigkeit erfasst, bspw. basierend auf dem Dynamoprinzip, oder es kann ein Winkelsensor verwendet werden, der den Verlauf der Winkelstellung der Tretkurbel erfasst, wobei die Winkelstellung nach der Zeit abgeleitet wird, um die Winkelgeschwindigkeit vorzusehen.

Weiterhin sieht das erfindungsgemäße Verfahren vor, dass zumindest eine Signaleigenschaft der Winkelgeschwindigkeit ermittelt wird. Diese Signaleigenschaft ist ein Maß für die Abweichung der Signalform des Wechselanteils der Winkelgeschwindigkeit von einer Sinuskurve, die die gleiche Frequenz wie der Wechselanteil der Winkelgeschwindigkeit aufweist. Das weitere Verfahren sieht vor, dass das abzuschätzende Drehmoment ermittelt wird durch Zuordnen des Drehmoments zu der zumindest einen ermittelten Signaleigenschaft. Hierzu wird eine vorbestimmte Abhängigkeit zwischen der zumindest einen Signaleigenschaft und zugehörigem Drehmoment verwendet. Die Abhängigkeit gibt den oben beschriebenen Zusammenhang zwischen Drehmoment bzw. Pedalleistung und Schwankungsstärke in der Drehzahl bzw. in der Winkelgeschwindigkeit wieder. Während beispielsweise gemäß einer empirischen Erhebung von Drehzahl und zugehöriger Signaleigenschaft dieser Zusammenhang erstellt wird und abrufbar hinterlegt wird (sei es durch diskrete Wertgegenüberstellungen oder durch eine Näherungsformel), sieht dieser Schritt des Verfahrens vor, die vorher bestimmten Zusammenhänge zu verwenden, um aus einer bekannten bzw. erfassten Signaleigenschaft auf das zugehörige Drehmoment zu schließen. Das derart abgeschätzte Drehmoment ist äquivalent zu einem zeitlich gemittelten Drehmoment oder einer durchschnittlichen Leistung, mit der der Fahrer die Pedale betätigt. Das zeitlich gemittelte Drehmoment oder die durchschnittlichen Leistung entspricht einem mittleren Drehmoment oder einer mittleren Leistung, die von Schwankungen durch die Pedaltritte bereinigt ist, d.h. eine über ein Zeitfenster gemittelte Leistung oder gemitteltes Drehmoment, wobei das Zeitfenster eine oder mehrere Perioden der Pedalkreisbewegung überstreicht.

Eine vorbereitende Ausführungsform der Erfindung sieht vor, dass ferner die vorbestimmte Abhängigkeit durch Messen des Drehmoments und der zugehörigen Winkelgeschwindigkeit für eine Vielzahl von Drehmomenten vorgesehen wird. Mehrere verschiedene Drehmomente und die zumindest eine Signaleigenschaft der zugehörigen Winkelgeschwindigkeit werden als eine Look-up-Tabelle abgelegt.

Alternativ werden diese als eine Näherungsgleichung oder als eine andere empirische Zuordnung wiedergegeben, die die Signaleigenschaften auf die Drehmomente abbildet. Diese Abhängigkeiten werden in Form der Look-up-Tabelle, der Näherungsgleichung oder der empirischen Zuordnung bei der Ausführung des erfindungsgemäßen Verfahrens zum Abschätzen des Drehmoments verwendet, d.h. beim Zuordnen des Drehmoments zu der ermittelten mindestens einen Signaleigenschaft, die anhand der erfassten Winkelgeschwindigkeit vorgesehen wurde.

Eine Ausführungsform sieht vor, dass das Drehmoment zugeordnet wird unter Berücksichtigung einer Drehzahl, die einer gemittelten Winkelgeschwindigkeit entspricht. Hierbei ordnet die vorbestimmte Abhängigkeit Drehmomente der zumindest einen Signaleigenschaft für verschiedene Drehzahlen zu. Das Drehmoment wird daher für die Drehzahl und für die zumindest eine Signaleigenschaft aus der vorbestimmten Abhängigkeit zugeordnet, um das aktuelle Drehmoment abzuschätzen.

Eine spezifische Ausführungsform der Erfindung sieht vor, dass die zumindest eine Signaleigenschaft ermittelt wird durch kontinuierliches oder periodisches Erfassen des Drehwinkels der Tretkurbel. Die zeitliche bzw. winkelbezogene Auflösung, die bei der Erfassung verwendet wird, sieht vorzugsweise mindestens 8 Meßpunkte pro Umdrehung der Tretkurbel vor, vorzugsweise mehr als 20. Die Winkelgeschwindigkeit wird als zeitliche Ableitung des Drehwinkels vorgesehen, der von einem Winkelgeber erfasst wird, der mit der Tretkurbel verbunden ist.

Ferner wird erfindungsgemäß ein Maximalgradient oder eine maximale Änderungsrate der Winkelgeschwindigkeit erfasst. Zudem kann ein Verhältnis (bspw. ein Quotient) zwischen niederfrequenten und höherfrequenten Leistungsanteilen der Winkelgeschwindigkeit erfasst werden. Mit niederfrequenten Anteilen werden Anteile bezeichnet, die der Grundfrequenz des Wechselanteils entsprechen, die wiederum der Drehzahl entspricht. Höherfrequente Anteile sind Anteile, die um einen Sicherheitsabstand über einer Frequenz liegen, die der aktuellen Drehzahl entspricht oder einer angenommenen maximalen Drehzahl, bspw. 21/s. Schließlich kann eine Leistung (oder ein Maß für die Leistung) der Amplitudendifferenz zwischen einer Sinuskurve, die dem Verlauf der Winkelgeschwindigkeit insbesondere in ihrer Frequenz angenähert ist, und dem Wechselanteil der Winkelgeschwindigkeit, erfasst werden. Diese Größen sind Ausführungsformen der Signaleigenschaft, die einem Maß für die Abweichung der Signalform des Wechselanteils von einem Sinus entspricht, d.h. einer Verzerrung gegenüber einer runden, kontinuierlichen Betätigung der Pedale. Die Erfassung der niederfrequenten und höherfrequenten Leistungsanteilen entspricht einer Betrachtung des Wechselanteils der Winkelgeschwindigkeit im Frequenzraum, während die Betrachtung der Differenz zwischen Winkelgeschwindigkeit und angenähertem Sinusverlauf einer Betrachtung des Wechselanteils im Zeitraum entspricht. Beide Betrachtungsweisen sind komplementär zueinander und betreffen die gleiche Qualität des Wechselanteils, nämlich den Grad der Verzerrung gegenüber einem sinusförmigen Verlauf. Anstatt eines sinusförmigen Verlaufs kann auch ein Verlauf herangezogen werden, der sich beim Betätigen der Pedale mit geringem Drehmoment ergibt und der empirisch ermittelt wird. Dieser Verlauf kann im Zeitraum oder im Frequenzraum als Norm verwendet werden, mit der der aktuelle Wechselanteil verglichen wird, um anhand der Stärke des Unterschieds auf das Drehmoment zu schließen. Die Stärke des Unterschieds ist in streng monotoner Abhängigkeit mit dem abzuschätzenden Drehmoment.

Eine weitere Ausführungsform des Verfahrens mit wertdiskreter Zuordnung sieht vor, dass das Zuordnen mittels der vorbestimmten Abhängigkeit ausgeführt wird, wobei die Abhängigkeit als eine Vielzahl vorbestimmter Zuordnungen von diskreten Drehmomentwerten oder Drehmomentwertintervallen zu zugehörigen diskreten Signaleigenschaftswerten oder Signaleigenschaftintervallen vorliegt. Die tatsächlich erfassten Signaleigenschaften werden zunächst zumindest einem gespeicherten Signaleigenschaftswert zugeordnet, vorzugsweise dem oder den nächstliegenden. Das Zuordnen des Drehmoments wird vorgesehen durch Abrufen zumindest eines Drehmomentwerts, der einem Signaleigenschaftwert nahe der ermittelten Signaleigenschaft zugeordnet ist oder einem Signaleigenschaftwertintervall zugeordnet ist, in dem die ermittelte Signaleigenschaft liegt. Der zugehörige Drehmomentwert kann unmittelbar ausgegeben werden. Vorzugsweise wird dieser interpoliert oder korrigiert gemäß der Abweichung zwischen Signaleigenschaftwert und ermittelten Signaleigenschaft oder, alternativ, gemäß der Lage der ermittelten Signaleigenschaft in dem Signaleigenschaftwertintervall. Dadurch kann eine abzählbare Vielzahl an einzelnen Zuordnungen gespeichert sein und bei der Zuordnung der Drehzahl verwendet werden.

Die Erfindung wird ferner realisiert durch eine Vorrichtung zur Abschätzung eines Drehmoments, das auf eine Tretkurbel eines Elektrofahrrads ausgeübt wird. Die Vorrichtung umfasst einen Winkelgeschwindigkeitssensor, der eingerichtet ist, drehbewegungsübertragend mit der Drehkurbel verbunden zu werden. Der Winkelgeschwindigkeitssensor gibt ein Winkelgeschwindigkeitssignal gemäß der Drehbewegung der Drehkurbel ab. Die Vorrichtung weist ferner einen Signalwandler auf, der eingerichtet ist, das Winkelgeschwindigkeitssignal in zumindest eine Signaleigenschaft zu wandeln. Die zumindest eine Signaleigenschaft ist eine Abweichung der Signalform des Wechselanteils der Winkelgeschwindigkeit von einer Sinuskurve, die die gleiche Frequenz wie der Wechselanteil der Winkelgeschwindigkeit aufweist. Die Vorrichtung ist ferner mit einer Berechnungseinheit ausgestattet, die mit dem Signalwandler verbunden ist, um die zumindest eine gewandelte Signaleigenschaft zu empfangen. Die Berechnungseinheit weist eine in der Berechnungseinheit hinterlegte Zuordnung auf, die Drehmomentwerte und die zumindest eine Signaleigenschaft einander zuordnet. Die Berechnungseinheit ist eingerichtet, die gewandelte Signaleigenschaft gemäß der Zuordnung dem abzuschätzenden Drehmoment zuzuordnen und das abzuschätzende Drehmoment an einem Ausgang der Vorrichtung auszugeben.

Eine Ausführungsform der erfindungsgemäßen Vorrichtung sieht vor, dass die Berechnungseinheit eine Näherungsformel implementiert, die einen Zusammenhang zwischen der mindestens einen Signaleigenschaft und dem Drehmoment wiedergibt. Mittels der implementierten Näherungsformel ist die Berechnungseinheit eingerichtet, mindestens einer Signaleigenschaft ein zugehöriges Drehmoment zuzuordnen und auszugeben. Alternativ weist die Berechnungseinheit eine Look-up-Tabelle auf, in der eine Mehrzahl verschiedener Drehmomente und jeweilig die zumindest eine Signaleigenschaft der zugehörigen Winkelgeschwindigkeit abgelegt und einander zugeordnet sind. Die Berechnungseinheit ist eingerichtet, der von dem Signalwandler vorgesehenen Signaleigenschaft ein Drehmoment zuzuordnen, das in der Look-up-Tabelle abgelegt ist. Die Berechnungseinheit ist ferner eingerichtet, das aus der Look-up-Tabelle zugeordnete Drehmoment abzugeben.

Eine weitere Ausführung der Vorrichtung sieht vor, dass die in der Berechnungseinheit hinterlegte Zuordnung die Drehmomentwerte und die zumindest eine Signaleigenschaft für verschiedene Drehzahlen, die einer gemittelten Winkelgeschwindigkeit entsprechen, einander zuordnet. Die Vorrichtung umfasst ferner eine Mittelungseinrichtung, die zur zeitlichen Mittelung des Winkelgeschwindigkeitssignals eingerichtet ist. Die Mittelungseinrichtung ist zur Eingabe des zeitlich gemittelten Winkelgeschwindigkeitssignals in die Look-up-Tabelle mit dieser verbunden.

Eine spezifische Ausführungsform der erfindungsgemäßen Vorrichtung sieht vor, dass der Signalwandler einen Hochpass umfasst, der eingerichtet ist, eine Gleichanteilkomponente der Winkelgeschwindigkeit aus dem Winkelgeschwindigkeitssignal zu entfernen. Die Vorrichtung verfügt ferner über eine nachgeschaltete Signalleistungserfassungseinheit, die eingerichtet ist, die Leistung der verbleibenden Wechselkomponente des Winkelgeschwindigkeitssignals als die Signaleigenschaft zu erfassen. Die Signaleigenschaft kann als Effektivwert, Scheitelwert, Amplitude oder Spitze-Tal-Wert der Wechselkomponente erfasst werden. Alternativ ist der Signalwandler mit einem Differenzierer sowie einer nachgeschalteten Maximum- oder Minimumerfassungseinheit ausgerüstet, um die Signaleigenschaft als den größten positiven bzw. kleinsten negativen Gradienten des Wechselgeschwindigkeitssignals vorzusehen. Weiterhin kann der Signalwandler eine Frequenzspektrumerfassungseinheit umfassen, die eingerichtet ist, den Grad der Verzerrung zu erfassen. Diese Einheit ist eingerichtet, um beispielsweise anhand der Leistung eines höherfrequenten Anteils in dem Winkelgeschwindigkeitssignals, dessen Frequenz über einer Grundfrequenz von Winkelgeschwindigkeitsschwankungen liegt, den Grad der Verzerrung zu erfassen. Der Grad der Verzerrung entspricht der Abweichung der Signalform von einer Sinuskurve.

Schließlich wird die Erfindung vorgesehen von einem elektronisch abrufbaren Speicher, der die erfindungsgemäße Zuordnung speichert, mit der aus der Signaleigenschaft auf das Drehmoment geschlossen wird. In dem Speicher ist eine Zuordnung mehrerer Signaleigenschaftswerten zumindest einer Signaleigenschaft eines Winkelgeschwindigkeitssignals zu jeweiligen zugehörigen Drehmomente abgelegt. Die Winkelgeschwindigkeit, die das Winkelgeschwindigkeitssignal darstellt, entspricht der Drehgeschwindigkeit eines von einem Fahrer betätigten Elektrofahrrad-Tretantriebs über die Zeit, wobei das Drehmoment dem Drehmoment entspricht, mit dem der Fahrer den Elektrofahrrad-Tretantrieb betätigt. Die Signaleigenschaft ist eine Abweichung der Signalform des Wechselanteils der Winkelgeschwindigkeit von einer Sinuskurve, die die gleiche Frequenz wie der Wechselanteil der Winkelgeschwindigkeit aufweist. Der Speicher ist als Look-up-Tabelle ausgestaltet, die einen Zugriff auf Einträge aufweist, welche die Drehmomente wiedergeben. Die Look-up-Tabelle ist eingerichtet, von einem am Zugriff einzugebenden Signaleigenschaftwert adressiert zu werden. Alternativ speichert der Speicher Koeffizienten einer Näherungsgleichung, wobei die Koeffizienten eine angenäherte Entsprechung zwischen Signaleigenschaftswerten und zugehörigen Drehmomentwerten wiedergeben. Die Koeffizienten des Speichers sind eingerichtet, dass die Entsprechung (d.h. die Abhängigkeit) von einer Nährungsgleichung, beispielsweise einem Polynom, umgesetzt werden kann.

Die Erfindung wird insbesondere durch einen Mikroprozessor implementiert, auf dem ein Programm abläuft, das die Merkmale des erfindungsgemäßen Verfahrens oder der erfindungsgemäßen Vorrichtung implementiert, ggf. in Kombination mit einer festverdrahteten Logik.

### Kurze Beschreibung der Figuren

Ausführungsbeispiele der Erfindung sind in den Figuren dargestellt und werden in der nachfolgenden Beschreibung näher erläutert.

Es zeigen:
Figur 1a ein sich zeitlich verändernder Drehmomentverlauf;
Figur 1b ein zugehöriger Verlauf der Winkelgeschwindigkeit und
Figur 2 eine Ausführungsform der erfindungsgemäßen Vorrichtung Ausführungsbeispiele

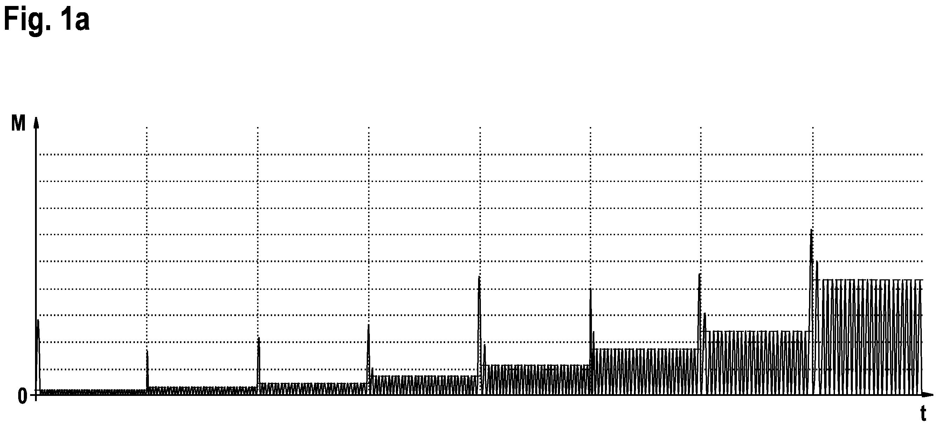

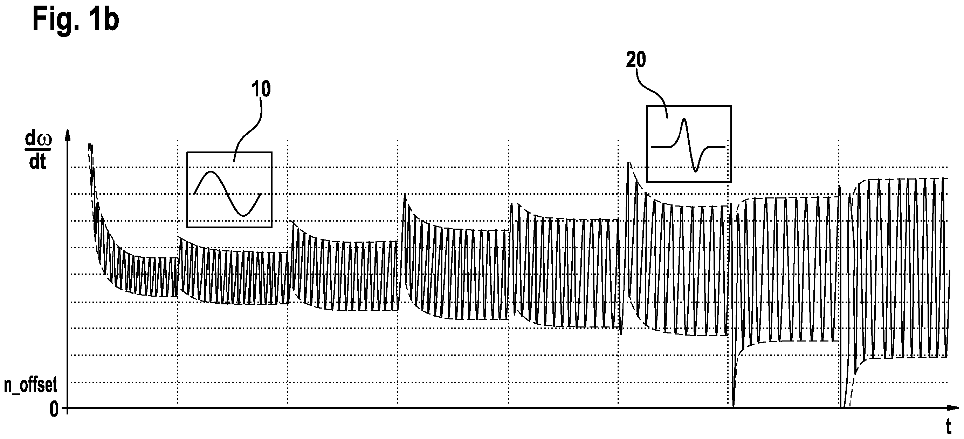

In Figur 1a ist ein Drehmomentverlauf des Drehmoments M dargestellt, der sich entlang der Zeitachse t verändert. Die zugehörige Figur 1b zeigt für diesen Drehmomentverlauf den Wechselanteil der zugehörigen Winkelgeschwindigkeit dω/dt.

An einzelnen Zeitpunkten, die durch eine senkrecht verlaufende Linie gekennzeichnet sind, werden der Gang und auch die Leistung erhöht, mit der der Pedalantrieb betätigt wird. Während die Figur 1a in der Höhe der x-Achse ein Drehmoment von 0 darstellt, zeigt die Figur 1b in der Höhe der x-Achse eine Offset-Winkelgeschwindigkeit n_offset. Der in Figur 1b dargestellte Abschnitt der Winkelgeschwindigkeitswerte (Spanne zwischen oberster und unterster Horizontalen) entspricht ca. 1/30 der Offset-Winkelgeschwindigkeit n_offset. Die Amplitude des Wechselanteils der Winkelgeschwindigkeit entspricht somit ca. 0,4 % - 2% der Offset-Winkelgeschwindigkeit. Die Offset-Winkelgeschwindigkeit entspricht dem Gleichanteil der Winkelgeschwindigkeit. Das Verhältnis von Amplitude des Wechselanteils zu dem Gleichanteil kann jedoch bei höheren Belastungen deutlich höher sein, bspw. bis zu 10, 30 oder 50 %. Die Figuren 1a und 1b betreffen die selbe Zeitperiode des selben Antriebssystems.

Es ist anhand der Figur 1a zu erkennen, dass die mechanische Leistung (d.h. entsprechend dem gemittelten Drehmoment M) mit der Zeit in Stufen zunimmt, da bei jeder vertikaler Linie die Belastung erhöht wurde. Die Leistung kann ferner dem Maximum des Drehmomentverlaufs M entsprechen. Anhand der Figur 1b ist zu erkennen, dass die Amplitude der Winkelgeschwindigkeit (somit die Leistung des Wechselanteils der Winkelgeschwindigkeit) ebenso mit der Belastung zunimmt.

Als Abhängigkeit könnte die Höhe der Einhüllenden des Drehmoments M und die Höhe der Einhüllenden des Wechselanteils der Winkelgeschwindigkeit für die jeweiligen Stufen gegenübergestellt werden (unter Nichtberücksichtigung der Einschwingperioden). Die Höhe der Einhüllenden des Wechselanteils entspricht dem Spitze-Tal-Wert, der ein Maß für die (Signal-)Leistung des Wechselanteils ist. Für die acht dargestellten Stufen ergeben sich jeweilige Abhängigkeiten bzw. Verknüpfungen für die einzelnen Scheitelwerte.

Mit Signalform 10 ist eine Signalform des Wechselanteils der Winkelgeschwindigkeit dargestellt, die bei geringer Belastung, d.h. mit geringem (gemitteltem) Drehmoment M erreicht wird, während Signalform 20 eine Signalform des Wechselanteils der Winkelgeschwindigkeit darstellt, die bei hohem (gemitteltem) Drehmoment auftritt. Es ist zu erkennen, dass Signalform 10 einem Sinus ähnelt während Signalform 20 einen sprunghaften Anstieg und Fall aufweist. Dieser Anstieg bzw. Fall von Signalform 20 ist verknüpft mit höherfrequenten Signalanteilen, die über der Grundfrequenz der Signalform liegen, sowie mit einem (maximalen) Gradienten(-betrag), der erkennbar größer ist als der (maximale) Gradienten(-betrag) der Signalform 20. Sowohl die Signalanteile als auch der Gradient sind Maße für die Abweichung der Signalform von einem Sinus bzw. Maße für die Unregelmäßigkeit der Kurbelbetätigung, wobei die Unregelmäßigkeit mit der mechanischen Belastung (d.h. zeitlich gemitteltes Drehmoment M) zunimmt. Dieser Zusammenhang verwendet die Erfindung, um anhand des Verlaufs der Drehzahl auf das Drehmoment zu schließen. Das so abgeschätzte Drehmoment kann als Eingangsgröße für eine Regelung des Elektromotorantriebs eines Elektrofahrrads verwendet werden. Die Erfindung ist insbesondere für Elektrofahrräder geeignet, kann jedoch für jeden per Hand oder per Fuß betätigten Kurbelantrieb verwendet werden, insbesondere für übliche Fahrräder, die zu Trainingszwecken mit einer Drehmomentanzeige oder Leistungsanzeige ausgestattet sind.

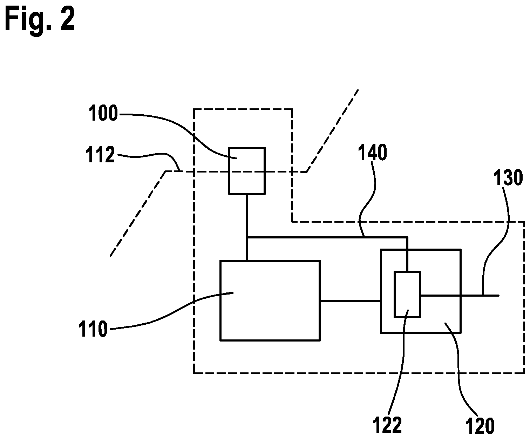

Die in Figur 2 dargestellte Ausführungsform der erfindungsgemäßen Vorrichtung umfasst einen Winkelgeschwindigkeitssensor (d.h. Drehzahlsensor) 100, der mit einem Signalwandler 110 verbunden ist. Der Drehzahlsensor ist an einer Tretkurbel 112 angeordnet, die nicht notwendigerweise Teil der Vorrichtung ist. Vielmehr ist der Sensor 100 grundsätzlich eingerichtet, mit einer Kurbel verbunden zu werden, so dass die Kurbel lediglich gestrichelt dargestellt ist. Der Signalwandler 110 ist eingerichtet, den Amplitudenhub, d.h. den Spitze-Tal-Wert des Signals zu ermitteln, das von dem Sensor 100 vorgesehen wird. Dieser Wert wird an die daran angeschlossene Berechnungseinheit 120 weitergegeben. Die Berechnungseinheit 120 umfasst eine Zuordnung 122, die dem Amplitudenhub, der von dem Signalwandler 110 abgegeben wird, ein Drehmoment zuordnet. Die Zuordnung 122 umfasst eine Vielzahl von Amplitudenhubwerten, wobei die Zuordnung 122 ferner für jeden der Amplitudenhubwerte einen Drehmomentwert vorsieht. Die Zuordnung 122 gibt an einem Ausgang 130 der Berechnungseinheit 120 den durch die Zuordnung 122 abgeschätzten Drehmomentwert ab.

Die optionale Verbindung 140 führt der Zuordnung 122 bzw. der Berechnungseinheit 120 eine Winkelgeschwindigkeit zu, d.h. eine Drehzahl, wobei die Zuordnung 122 vorzugsweise eingerichtet ist, den verschiedenen Amplitudenhubwerten für verschiedene Drehzahlen (Drehzahlintervallen) einen Drehmomentwert zuzuordnen. In der Zuordnung 122 ist jeder Kombination verschiedener Amplitudenhubwerte und verschiedener Drehzahlen ein Drehmomentwert zugeordnet. Die Zuordnung 122 ist als elektronisch abrufbarer Speicher implementiert, beispielsweise in Form einer Look-up-Tabelle.

In der Figur 2 sind die Komponenten der Erfindung, incl. der optionalen Komponenten innerhalb einer gepunkteten Linie dargestellt, wobei die gestrichelt dargestellte Kurbel nicht notwendigerweise ein Teil der Erfindung ist.

Grundsätzlich können ferner die verschiedenen Ermittlungsarten, die auf unterschiedlichen Signaleigenschaften beruhen, miteinander kombiniert werden, beispielsweise durch Interpolation, wobei das Verfahren mit unterschiedlichen Signaleigenschaften ausgeführt wird.

## Patentansprüche

1. Verfahren zum Abschätzen eines Drehmoments, das auf eine Tretkurbel eines Elektrofahrrads ausgeübt wird, mit den Schritten:
Erfassen einer Winkelgeschwindigkeit, mit der die Tretkurbel angetrieben wird, in Abhängigkeit der Zeit;
Ermitteln zumindest einer Signaleigenschaft der Winkelgeschwindigkeit; und
Zuordnen des Drehmoments zu der zumindest einen ermittelten Signaleigenschaft mittels einer vorbestimmten Abhängigkeit zwischen der zumindest einen Signaleigenschaft und zugehörigem Drehmoment;
**dadurch gekennzeichnet, dass** die Signaleigenschaft eine Abweichung der Signalform des Wechselanteils der Winkelgeschwindigkeit von einer Sinuskurve ist, die die gleiche Frequenz wie der Wechselanteil der Winkelgeschwindigkeit aufweist.

2. Verfahren nach Anspruch 1, wobei das Verfahren ferner umfasst: Vorsehen der vorbestimmten Abhängigkeit durch Messen des Drehmoments und der zugehörigen Winkelgeschwindigkeit für eine Vielzahl von Drehmomenten und Ablegen einer Mehrzahl verschiedener Drehmomente und der zumindest einen Signaleigenschaft der zugehörigen Winkelgeschwindigkeit als eine Look-up-Tabelle, eine Näherungsgleichung oder einer anderen empirischen Zuordnung, die die Signaleigenschaften auf die Drehmomente abbildet.

3. Verfahren nach Anspruch 1 oder 2, wobei das Zuordnen des Drehmoments vorgesehen wird durch Berücksichtigen einer Drehzahl, die einer gemittelten Winkelgeschwindigkeit entspricht, indem die vorbestimmte Abhängigkeit Drehmomente der zumindest einen Signaleigenschaft für verschiedene Drehzahlen zuordnet.

4. Verfahren nach einem der vorangehenden Ansprüche, wobei das Ermitteln der zumindest einen Signaleigenschaft vorgesehen wird durch kontinuierliches oder periodisches Erfassen des Drehwinkels der Tretkurbel, wobei die Winkelgeschwindigkeit als zeitliche Ableitung des Drehwinkels vorgesehen wird, und wobei die Leistung des Wechselanteils der Winkelgeschwindigkeit ermittelt wird durch Erfassen eines Maximalgradienten oder einer maximalen Änderungsrate der Winkelgeschwindigkeit oder eines Verhältnisses zwischen niederfrequenten und höherfrequenten Leistungsanteilen der Winkelgeschwindigkeit, oder einer Leistung der Amplitudendifferenz zwischen der Sinuskurve, die dem Verlauf Winkelgeschwindigkeit insbesondere in ihrer Frequenz angenähert ist, und dem Wechselanteil der Winkelgeschwindigkeit.

5. Verfahren nach einem der vorangehenden Ansprüche, wobei das Zuordnen mittels der vorbestimmten Abhängigkeit ausgeführt wird, die als eine Vielzahl vorbestimmter Zuordnungen von diskreten Drehmomentwerten oder Drehmomentwertintervallen zu zugehörigen diskreten Signaleigenschaftswerten oder Signaleigenschaftintervallen vorliegt, und das Zuordnen ferner umfasst: Abrufen zumindest eines Drehmomentwerts, der einem Signaleigenschaftwert nahe der ermittelten Signaleigenschaft zugeordnet ist oder einem Signaleigenschaftwertintervall zugeordnet ist, in dem die ermittelte Signaleigenschaft liegt; und Interpolieren oder Korrigieren des Drehmomentwerts gemäß der Abweichung zwischen Signaleigenschaftwert und ermittelten Signaleigenschaft oder gemäß der Lage der ermittelten Signaleigenschaft in dem Signaleigenschaftwertintervall.

6. Vorrichtung zur Abschätzung eines Drehmoments, das auf eine Tretkurbel (112) eines Elektrofahrrads ausgeübt wird, mit einem Winkelgeschwindigkeitssensor (100), der eingerichtet ist, drehbewegungsübertragend mit der Tretkurbel verbunden zu werden, und der ein Winkelgeschwindigkeitssignal gemäß der Drehbewegung der Tretkurbel abgibt,
wobei die Vorrichtung ferner einen Signalwandler (110) aufweist, der eingerichtet ist, das Winkelgeschwindigkeitssignal in zumindest eine Signaleigenschaft zu wandeln; und
die Vorrichtung ferner mit einer Berechnungseinheit (120) ausgestattet ist, die mit dem Signalwandler (110) verbunden ist, um die zumindest eine gewandelte Signaleigenschaft zu empfangen, wobei die Berechnungseinheit eine in der Berechnungseinheit (120) hinterlegte Zuordnung (122) aufweist, die Drehmomentwerte und die zumindest eine Signaleigenschaft einander zuordnet, wobei die Berechnungseinheit eingerichtet ist, die gewandelte Signaleigenschaft gemäß der Zuordnung dem abzuschätzenden Drehmoment zuzuordnen und das abzuschätzenden Drehmoment an einem Ausgang (130) der Vorrichtung auszugeben;
**dadurch gekennzeichnet, dass** die zumindest eine Signaleigenschaft eine Abweichung der Signalform des Wechselanteils der Winkelgeschwindigkeit von einer Sinuskurve ist, die die gleiche Frequenz wie der Wechselanteil der Winkelgeschwindigkeit aufweist.

7. Vorrichtung nach Anspruch 6, wobei die Berechnungseinheit (120) eine Näherungsformel implementiert, die einen Zusammenhang zwischen der mindestens einen Signaleigenschaft und dem Drehmoment wiedergibt, und mittels der die Berechnungseinheit (120) eingerichtet ist, der mindestens einen Signaleigenschaft ein zugehöriges Drehmoment zuzuordnen und auszugeben, oder die Berechnungseinheit eine Look-up-Tabelle (122) aufweist, in der eine Mehrzahl verschiedener Drehmomente und jeweilig die zumindest eine Signaleigenschaft der zugehörigen Winkelgeschwindigkeit abgelegt und einander zugeordnet sind, wobei die Berechnungseinheit eingerichtet ist, der von dem Signalwandler (110) vorgesehene Signaleigenschaft ein Drehmoment zuzuordnen, das in der Look-up-Tabelle (122) abgelegt ist, und das aus der Look-up-Tabelle zugeordnete Drehmoment abzugeben.

8. Vorrichtung nach Anspruch 6 oder 7, wobei die in der Berechnungseinheit (120) hinterlegte Zuordnung die Drehmomentwerte und die zumindest eine Signaleigenschaft für verschiedene Drehzahlen, die einer gemittelten Winkelgeschwindigkeit entsprechen, einander zugeordnet sind, und wobei die Vorrichtung ferner eine Mittelungseinrichtung umfasst, die zur zeitlichen Mittelung des Winkelgeschwindigkeitssignals eingerichtet ist, und die zur Eingabe des zeitlich gemittelten Winkelgeschwindigkeitssignals in die Look-up-Tabelle (122) mit dieser verbunden ist.

9. Vorrichtung nach Anspruch 6, 7 oder 8, wobei der Signalwandler (110) einen Hochpass umfasst, der eingerichtet ist, eine Gleichanteilkomponente der Winkelgeschwindigkeit aus dem Winkelgeschwindigkeitssignal zu entfernen, sowie eine nachgeschaltete Signalleistungserfassungseinheit, die eingerichtet ist, die Leistung der verbleibenden Wechselkomponente des Winkelgeschwindigkeitssignals als die Signaleigenschaft zu erfassen, insbesondere als Effektivwert, Scheitelwert, Amplitude oder Spitze-Tal-Wert der Wechselkomponente, oder der Signalwandler einen Differenzierer sowie eine nachgeschaltete Maximum- oder Minimumerfassungseinheit umfasst, um die Signaleigenschaft als den größten positiven bzw. kleinsten negativen Gradienten des Wechselgeschwindigkeitssignals vorzusehen, oder wobei der Signalwandler eine Frequenzspektrumerfassungseinheit umfasst, die eingerichtet ist, den Grad der Verzerrung, beispielsweise anhand der Leistung eines höherfrequenten Anteils in dem Winkelgeschwindigkeitssignals, dessen Frequenz über einer Grundfrequenz von Winkelgeschwindigkeitsschwankungen liegt, zu erfassen.

10. Elektronisch abrufbarer Speicher (122), in dem eine Zuordnung mehrerer Signaleigenschaftswerten zumindest einer Signaleigenschaft eines Winkelgeschwindigkeitssignals zu jeweiligen zugehörigen Drehmomente abgelegt sind, wobei die Winkelgeschwindigkeit, die das Winkelgeschwindigkeitssignal darstellt, die Drehgeschwindigkeit eines von einem Fahrer betätigten Elektrofahrrad-Tretantriebs über die Zeit wiedergibt, und das Drehmoment dem Drehmoment entspricht, mit dem der Fahrer den Elektrofahrrad-Tretantrieb betätigt, wobei der Speicher als Look-up-Tabelle ausgestaltet ist, die einen Zugriff auf Einträge aufweist, die die Drehmomente wiedergeben, und die Look-up-Tabelle von einem am Zugriff einzugebenden Signaleigenschaftwert adressiert wird, oder wobei der Speicher Koeffizienten einer Näherungsgleichung speichert, die Koeffizienten eine angenäherte Entsprechung zwischen Signaleigenschaftswerten und zugehörigen Drehmomentwerten wiedergeben, und die Koeffizienten des Speichers eingerichtet sind, dass die Entsprechung von einer Näherungsgleichung, beispielsweise von einem Polynom, umgesetzt werden kann;
**dadurch gekennzeichnet, dass** die Signaleigenschaft eine Abweichung der Signalform des Wechselanteils der Winkelgeschwindigkeit von einer Sinuskurve ist, die die gleiche Frequenz wie der Wechselanteil der Winkelgeschwindigkeit aufweist.

## Claims

1. Method for estimating a torque which is applied to a pedal crank of an electric bicycle, comprising the steps:
sensing an angular speed with which the pedal crank is driven, as a function of the time;
determining at least one signal property of the angular speed and
assigning the torque to the at least one determined signal property by means of a predetermined dependence between the at least one signal property and associated torque;
**characterized in that** the signal property is a deviation of the shape of the signal of the alternating part of the angular speed from a sine curve which has the same frequency as the alternating part of the angular speed.

2. Method according to Claim 1, wherein the method also comprises: providing the predetermined dependence by measuring the torque and the associated angular speed for a multiplicity of torques and storing a multiplicity of different torques and the at least one signal property of the associated angular speed as a look-up table, a proximity equation or some other empirical assignment which maps the signal properties onto the torques.

3. Method according to Claim 1 or 2, wherein the assignment of the torque is provided by taking into account a rotational speed which corresponds to an averaged angular speed in that the predetermined dependence assigns torques to the at least one signal property for various rotational speeds.

4. Method according to one of the preceding claims, wherein the determination of the at least one signal property is determined by continuous or periodic sensing of the rotational angle of the pedal crank, wherein the angular speed is provided as a chronological derivative of the rotational angle, and wherein the power of the alternating part of the angular speed is determined by sensing a maximum gradient or a maximum rate of change of the angular speed or of a ratio between relatively low-frequency and relatively high-frequency power components of the angular speed or a power of the amplitude difference between the sine curve which is approximated to the profile of the angular speed, in particular in its frequency, and the alternating part of the angular speed.

5. Method according to one of the preceding claims, wherein the assignment is carried out by means of a predetermined dependence which is present as a multiplicity of predetermined assignments of discrete torque values or torque value intervals to associated discrete signal property values or signal property intervals, and the assignment also comprises: retrieving at least one torque value which is assigned to a signal property value close to the determined signal property or is assigned to a signal property value interval in which the determined signal property lies; and interpolating or correcting the torque value according to the deviation between the signal property value and the determined signal property or according to the position of the determined signal property in the signal property value interval.

6. Device for estimating a torque which is applied to a pedal crank (112) of an electric bicycle, having an angular speed sensor (100) which is configured to be connected to the pedal crank in such a way that it transmits rotational movement, said angular speed sensor (100) outputting an angular speed signal according to the rotational movement of the pedal crank,
wherein the device also has a signal converter (110) which is configured to convert the angular speed signal into at least one signal property;
and
the device is also equipped with a calculation unit (120) which is connected to the signal converter (110) in order to receive the at least one converted signal property, wherein the calculation unit has an assignment (122) which is stored in the calculation unit (120) and which assigns torque values and the at least one signal property to one another, wherein the calculation unit is configured to assign the converted signal property according to the assignment to the torque which is to be estimated and to output the torque which is to be estimated to an output (130) of the device;
**characterized in that** the at least one signal property is a deviation of the shape of the signal of the alternating part of the angular speed from a sine curve which has the same frequency as the alternating part of the angular speed.

7. Device according to Claim 6, wherein the calculation unit (120) implements a proximity formula which represents a relationship between the at least one signal property and the torque, and by means of which the calculation unit (120) is configured to assign an associated torque to the at least one signal property and to output it, or the calculation unit has a look-up table (122) in which a multiplicity of different torques and the at least one signal property of the associated angular speed are respectively stored and assigned to one another, wherein the calculation unit is configured to assign a torque to the signal property which is provided by the signal converter (110), which torque is stored in the look-up table (122), and to output the assigned torque from the look-up table.

8. Device according to Claim 6 or 7, wherein the assignment stored in the calculation unit (120), the torque values and the at least one signal property for various rotational speeds which correspond to an average angular speed are assigned to one another, and wherein the device also comprises an averaging device which is configured to average the angular speed signal over time and which is connected to the look-up table (122) in order to input therein the angular speed signal which has been averaged over time.

9. Device according to Claim 6, 7 or 8, wherein the signal converter (110) comprises a high-pass filter which is configured to remove a constant component of the angular speed from the angular speed signal, and a downstream signal power-sensing unit which is configured to sense the power of the remaining alternating component of the angular speed signal as the signal property, in particular as an effective value, peak value, amplitude or peak-trough value of the alternating component, or the signal converter comprises a differentiator and a downstream maximum or minimum sensing unit in order to provide the signal property as the largest positive or smallest negative gradient of the alternating speed signal or wherein the signal converter comprises a frequency spectrum-sensing unit which is configured to sense the degree of distortion, for example on the basis of the power of a relatively high frequency portion in the angular speed signal whose frequency lies above a fundamental frequency of angular speed fluctuations.

10. Electronically retrievable memory (122) in which an assignment of a plurality of signal property values of at least one signal property of an angular speed signal relating to respective associated torques are stored, wherein the angular speed, which is presented in the form of the angular speed signal, represents the rotational speed of an electric bicycle pedal crank drive, activated by a driver, over time, and the torque corresponds to the torque with which the driver activates the electric bicycle pedal crank drive, wherein the memory is configured as a look-up table which has access to entries which represent the torques, and the look-up table is addressed by a signal property value which is to be input at the access, or wherein the memory stores coefficients of a proximity equation, the coefficients represent an approximated correspondence between signal property values and associated torque values, and the coefficients of the memory are configured in such a way that the correspondence can be implemented by a proximity equation, for example by a polynomial;
**characterized in that** the signal property is a deviation of the shape of the signal of the alternating part of the angular speed from a sine curve which has the same frequency as the alternating part of the angular speed.

## Revendications

1. Procédé pour estimer un couple qui est exercé sur un pédalier d'une bicyclette électrique, comprenant les étapes suivantes :
détection d'une vitesse angulaire, à laquelle est entraîné le pédalier, en fonction du temps ;
détermination d'au moins une propriété de signal de la vitesse angulaire ; et
mise en relation du couple avec l'au moins une propriété de signal déterminée au moyen d'une dépendance prédéfinie entre l'au moins une propriété de signal et le couple associé ;
**caractérisé en ce que** la propriété de signal est un écart entre la forme du signal de la composante alternative de la vitesse angulaire et une courbe sinusoïdale qui possède la même fréquence que la composante alternative de la vitesse angulaire.

2. Procédé selon la revendication 1, le procédé comprenant en outre : prévision de la dépendance prédéfinie par mesure du couple et de la vitesse angulaire associée pour une pluralité de couples et consignation d'une pluralité de couples différents et de l'au moins une propriété de signal de la vitesse angulaire associée sous la forme d'un tableau de consultation, d'une équation d'approximation ou d'une autre mise en relation empirique qui représente les propriétés de signal en fonction des couples.

3. Procédé selon la revendication 1 ou 2, la mise en relation du couple étant prévue en tenant compte d'une vitesse de rotation qui correspond à une vitesse angulaire moyenne calculée, en ce que la dépendance prédéfinie met en relation des couples avec l'au moins une propriété de signal pour différentes vitesses de rotation.

4. Procédé selon l'une des revendications précédentes, la détermination de l'au moins une propriété de signal étant prévue par une détection continue ou périodique de l'angle de rotation du pédalier, la vitesse angulaire étant prévue en tant que dérivée dans le temps de l'angle de rotation, et la puissance de la composante alternative de la vitesse angulaire étant déterminée en détectant un gradient maximum ou un taux de variation maximum de la vitesse angulaire ou d'un rapport entre les composantes de puissance à basse fréquence et à haute fréquence de la vitesse angulaire, ou une puissance de la différence d'amplitudes entre la courbe sinusoïdale qui, notamment par sa fréquence, se rapproche du tracé de la vitesse angulaire, et la composante alternative de la vitesse angulaire.

5. Procédé selon l'une des revendications précédentes, la mise en relation étant effectuée au moyen de la dépendance prédéfinie, laquelle se présente sous la forme d'une pluralité de mises en relation prédéfinies de valeurs de couple discrètes ou d'intervalles de valeurs de couple avec les valeurs de propriété de signal discrètes ou les intervalles de propriétés de signal associés, et la mise en relation comprenant en outre : invocation d'au moins une valeur de couple qui est mise en relation avec une valeur de propriété de signal proche de la propriété de signal déterminée ou qui est mise en relation avec un intervalle de valeurs de propriété de signal dans lequel se trouve la propriété de signal déterminée ; et interpolation ou correction de la valeur de couple conformément à l'écart entre la valeur de propriété de signal et la propriété de signal déterminée ou conformément à la position de la propriété de signal déterminée dans l'intervalle de valeurs de propriété de signal.

6. Dispositif pour estimer un couple qui est exercé sur un pédalier (112) d'une bicyclette électrique, comprenant un capteur de vitesse angulaire (100) qui est conçu pour être relié à un pédalier avec transmission de mouvement de rotation et qui délivre un signal de vitesse angulaire conformément au mouvement de rotation du pédalier,
le dispositif possédant en outre un convertisseur de signal (110) qui est conçu pour convertir le signal de vitesse angulaire en au moins une propriété de signal ; le dispositif étant en outre équipé d'une unité de calcul (120) qui est reliée au convertisseur de signal (110) afin de recevoir l'au moins une propriété de signal convertie, l'unité de calcul présentant une mise en relation (122) enregistrée dans l'unité de calcul (120), laquelle met en relation les unes avec les autres des valeurs de couple et l'au moins une propriété de signal, l'unité de calcul étant conçue pour mettre en relation la propriété de signal convertie avec le couple à estimer conformément à la mise en relation et pour délivrer le couple à estimer au niveau d'une sortie (130) du dispositif ; **caractérisé en ce que** l'au moins une propriété de signal est un écart entre la forme du signal de la composante alternative de la vitesse angulaire et une courbe sinusoïdale qui possède la même fréquence que la composante alternative de la vitesse angulaire.

7. Dispositif selon la revendication 6, l'unité de calcul (120) mettant en oeuvre une formule d'approximation qui restitue une corrélation entre l'au moins une propriété de signal et le couple, et au moyen de laquelle l'unité de calcul (120) est conçue pour mettre en relation avec l'au moins une propriété de signal un couple associé et le délivrer, ou l'unité de calcul possédant un tableau de consultation (122) dans lequel sont consignés et mis en relation les uns avec autres une pluralité de couples différents et respectivement l'au moins une propriété de signal de la vitesse angulaire associée, l'unité de calcul étant conçue pour mettre en relation la propriété de signal prévue par le convertisseur de signal (110) avec un couple qui est consigné dans le tableau de consultation (122) et pour délivrer le couple mis en relation depuis le tableau de consultation.

8. Dispositif selon la revendication 6 ou 7, la mise en relation enregistrée dans l'unité de calcul (120) les valeurs de couple et l'au moins une propriété de signal pour différentes vitesses de rotation qui correspondent à une vitesse angulaire moyenne calculée, sont mises en relation les unes avec les autres et le dispositif comprenant en outre un appareil de calcul de la moyenne qui est conçu pour calculer la moyenne dans le temps du signal de vitesse angulaire et qui est relié au tableau de consultation (122) en vue d'entrer dans celui-ci le signal de vitesse angulaire moyen calculé dans le temps.

9. Dispositif selon la revendication 6, 7 ou 8, le convertisseur de signal (110) comprenant un filtre passe-haut qui est conçu pour supprimer du signal de vitesse angulaire une composante continue de la vitesse angulaire, ainsi qu'une unité de détection de puissance de signal branchée en aval, laquelle est conçue pour détecter la puissance de la composante alternative restante du signal de vitesse angulaire en tant que la propriété de signal, notamment en tant que valeur efficace, valeur de crête, amplitude ou valeur crête-vallée de la composante alternative, ou le convertisseur de signal comprenant un différenciateur ainsi qu'une unité de détection de maximum ou de minimum branchée en aval afin de prévoir la propriété de signal en tant que plus grand gradient positif ou plus petit gradient négatif du signal de vitesse angulaire, ou le convertisseur de signal comprenant une unité de détection de spectre de fréquences qui est conçue pour détecter le degré de distorsion, par exemple au moyen de la puissance d'une part à haute fréquence dans le signal de vitesse angulaire dont la fréquence est supérieure à une fréquence fondamentale de fluctuations de la vitesse angulaire.

10. Mémoire (122) consultable électroniquement dans laquelle est enregistrée une mise en relation de plusieurs valeurs de propriété de signal d'au moins une propriété de signal d'un signal de vitesse angulaire avec des couples associés respectifs, la vitesse angulaire qui représente le signal de vitesse angulaire restituant la vitesse de rotation d'un mécanisme d'entraînement à pédale de bicyclette électrique actionné par un conducteur en fonction du temps, et le couple correspondant au couple avec lequel le conducteur actionne le mécanisme d'entraînement à pédale de bicyclette électrique, la mémoire étant configuré sous la forme d'un tableau de consultation qui possède un accès à des entrées, lesquelles restituent les couples, et le tableau de consultation étant adressé par une valeur de propriété de signal à saisir au niveau de l'accès, ou la mémoire enregistrant des coefficients d'une équation d'approximation, les coefficients restituant une correspondance approchée entre les valeurs de propriété de signal et les valeurs de couple associées, et les coefficients de la mémoire étant conçus de telle sorte que la correspondance peut être convertie par une équation d'approximation, par exemple par un polynôme ;
**caractérisée en ce que** la propriété de signal est un écart entre la forme du signal de la composante alternative de la vitesse angulaire et une courbe sinusoïdale qui possède la même fréquence que la composante alternative de la vitesse angulaire.
